# EUROPEAN PATENT APPLICATION

(11) **EP 4 694 111 A1**
(43) Date of publication of application: **11.02.2026**
(21) Application number: 24861623.7
(22) Date of filing: 27.06.2024
(51) Int. Cl.: H04N 13/332

(54) **DISPLAY METHOD AND ELECTRONIC DEVICE**

(30) Priority: 06.09.2023 CN 202311148413
(71) Applicant: Huawei Technologies Co., Ltd., Shenzhen, Guangdong 518129 (CN)
(72) Inventor: ZHANG, Wenhao, Shenzhen, Guangdong 518129 (CN)
(74) Representative: Pfenning, Meinig & Partner mbB
(86) International application number: PCT/CN2024/101954
(87) International publication number: WO 2025/050777

(57) **Abstract**

This application provides a display method and an electronic device, relating to the field of terminal technologies. After displaying a first view including a real-scene image and a virtual-scene image, the electronic device may obtain pose information of a user, and display a second view based on the pose information of the user. The second view is obtained based on an adjustment to the first view. Image quality of the virtual-scene image in the first view is better than image quality of a virtual-scene image in the second view, or image quality of the real-scene image in the first view is better than image quality of a real-scene image in the second view. The electronic device can reduce computing resources allocated to the real-scene image or the virtual-scene image included in the first view by lowering the image quality of the real-scene image or the virtual-scene image in the first view, to save computing resources of the electronic device.

## Description

This application claims priority to Chinese Patent Application No. 202311148413.X, filed with the China National Intellectual Property Administration on September 6, 2023 and entitled "DISPLAY METHOD AND ELECTRONIC DEVICE", which is incorporated herein by reference in its entirety.

### TECHNICAL FIELD

This application relates to the field of terminal technologies, and in particular, to a display method and an electronic device.

### BACKGROUND

A device having a mixed reality (mixed reality, MR) function may be referred to as an MR device. The MR device can superimpose real-world images with virtual images corresponding to virtual content, to display MR images. Since users' field of view and attention are both limited, when using MR devices, users may focus on a specific part of the MR image, and ignores other parts. For example, when watching a movie with an MR device, users tend to pay more attention to movie scenes within the MR image, while ignoring environmental images within the MR image.

When rendering MR images, MR devices typically use same computing resources to render all regions within a same frame of MR image. However, since users tend to ignore some views in the MR image, using identical computing resources to render both ignored views and views of interest in the MR image leads to a waste of computing resources.

### SUMMARY

Embodiments of this application provide a display method and an electronic device, to dynamically adjust computing resources allocated for rendering regions in an MR image, so as to save computing resources for rendering the MR image.

To achieve the foregoing objectives, the following technical solutions are used in embodiments of this application.

According to a first aspect, an embodiment of this application provides a display method, applied to an electronic device. The electronic device may display a first view. The first view includes a real-scene image and a virtual-scene image. The real-scene image includes an image of an environment around the electronic device, and the virtual-scene image includes an image corresponding to virtual content. The electronic device displays a second view based on pose information of a user. The second view is obtained based on an adjustment to the first view. Image quality of the virtual-scene image in the first view is better than image quality of a virtual-scene image in the second view, or image quality of the real-scene image in the first view is better than image quality of a real-scene image in the second view.

In the method in this embodiment of this application, the electronic device may enhance visual effect of the real-scene image in the first view and weaken visual effect of the virtual-scene image in the first view by adjusting the first view. This meets a requirement of the user for differentiation of displayed content of the electronic device, and is beneficial to experience when the user views the real-scene image in the second view. In addition, the electronic device can save computing resources of the electronic device by reducing computing resources allocated to the virtual-scene image included in the first view. Alternatively, the electronic device may enhance visual effect of the virtual-scene image in the first view and weaken visual effect of the real-scene image in the first view by adjusting the first view. This meets a requirement of the user for differentiation of displayed content of the electronic device, and is beneficial to experience when the user views the virtual-scene image in the second view. In addition, the electronic device can save computing resources of the electronic device by reducing computing resources allocated to the real-scene image included in the first view.

With reference to the first aspect, in a possible design, the image quality of the virtual-scene image is related to at least one item of the following information: an area of the virtual-scene image, a distance between the virtual-scene image and an edge of a view in which the virtual-scene image is located, or a rendering parameter of the virtual-scene image.

The image quality of the real-scene image is related to at least one item of the following information: an area of the real-scene image, a distance between the real-scene image and an edge of a view in which the real-scene image is located, a rendering parameter of the real-scene image, or a shooting parameter of a camera configured to obtain the real-scene image.

The rendering parameter includes at least one of a definition parameter, a resolution parameter, a color saturation parameter, a brightness parameter, a color temperature parameter, or a contrast parameter. The shooting parameter includes at least one of a shooting frame rate or a shutter speed.

In this solution, the electronic device may adjust at least one of an area of the virtual-scene image in the first view, a distance between the virtual-scene image and an edge of the view in which the virtual-scene image is located, or a rendering parameter of the virtual-scene image, to enhance or weaken visual effect of the virtual-scene image in the first view. Alternatively, the electronic device may adjust at least one of an area of the real-scene image in the first view, a distance between the real-scene image and an edge of the view in which the real-scene image is located, a rendering parameter of the real-scene image, or a shooting parameter of a camera configured to obtain the real-scene image, to enhance or weaken visual effect of the real-scene image in the first view. The electronic device can meet a requirement of the user for differentiation of displayed content of the electronic device by enhancing visual effect of the real-scene image or the virtual-scene image in the first view.

With reference to the first aspect, in a possible design, the at least one item of information corresponding to the virtual-scene image in the first view is adjusted, to obtain the second view; and/or the at least one item of information corresponding to the real-scene image in the first view is adjusted, to obtain the second view.

In this solution, the electronic device may obtain and display the second view by adjusting the at least one item of information corresponding to the virtual-scene image in the first view, and/or by adjusting the at least one item of information corresponding to the real-scene image in the first view. Visual effect of the real-scene image in the second view is stronger than visual effect of the virtual-scene image in the second view. Alternatively, visual effect of the virtual-scene image in the second view is stronger than visual effect of the real-scene image in the second view. This can meet a requirement of the user for differentiation of displayed content of the electronic device.

With reference to the first aspect, in a possible design, when the image quality of the virtual-scene image in the first view is better than the image quality of the virtual-scene image in the second view, an area of the virtual-scene image in the first view is greater than an area of the virtual-scene image in the second view; or when the image quality of the real-scene image in the first view is better than the image quality of the real-scene image in the second view, an area of the virtual-scene image in the first view is less than an area of the virtual-scene image in the second view.

In this solution, if the area of the virtual-scene image in the first view is greater than the area of the virtual-scene image in the second view, an area in which the virtual-scene image occludes the real-scene image in the second view is less than an area in which the virtual-scene image occludes the real-scene image in the first view. This can improve experience when the user views a real-scene image included in a to-be-rendered view. If the area of the virtual-scene image in the first view is less than the area of the virtual-scene image in the second view, an area in which the virtual-scene image occludes the real-scene image in the second view is greater than an area in which the virtual-scene image occludes the real-scene image in the first view. This can improve experience when the user views a virtual-scene image included in the to-be-rendered view.

With reference to the first aspect, in a possible design, when the image quality of the virtual-scene image in the first view is better than the image quality of the virtual-scene image in the second view, a distance between the virtual-scene image in the second view and an edge of the second view is less than a distance between the virtual-scene image in the first view and an edge of the first view.

In this solution, a distance between the virtual-scene image in the second view and a center of a field of view of the user is greater than a distance between the virtual-scene image in the first view and the center of the field of view of the user. This can improve experience when the user views the real-scene image included in the to-be-rendered view.

With reference to the first aspect, in a possible design, when the image quality of the real-scene image in the first view is better than the image quality of the real-scene image in the second view, the distance between the virtual-scene image in the first view and the edge of the first view is less than the distance between the virtual-scene image in the second view and the edge of the second view.

In this solution, the distance between the virtual-scene image in the second view and the center of the field of view of the user is less than the distance between the virtual-scene image in the first view and the center of the field of view of the user. This can improve experience when the user views the virtual-scene image included in the to-be-rendered view.

With reference to the first aspect, in a possible design, when the image quality of the virtual-scene image in the first view is better than the image quality of the virtual-scene image in the second view, the image quality of the real-scene image in the second view is better than the image quality of the real-scene image in the first view; or when the image quality of the real-scene image in the first view is better than the image quality of the real-scene image in the second view, the image quality of the virtual-scene image in the second view is better than the image quality of the virtual-scene image in the first view.

In this solution, the electronic device may improve the image quality of the real-scene image in the first view while lowering the image quality of the virtual-scene image in the first view. In this case, visual effect of the real-scene image in the first view can be enhanced, and visual effect of the virtual-scene image in the first view can be weakened. This meets a requirement of the user for differentiation of displayed content of the electronic device, and is beneficial to experience when the user views the real-scene image in the second view.

The electronic device may improve the image quality of the virtual-scene image in the first view while lowering the image quality of the real-scene image in the first view. In this case, visual effect of the virtual-scene image in the first view can be enhanced, and visual effect of the real-scene image in the first view can be weakened. This meets a requirement of the user for differentiation of displayed content of the electronic device, and is beneficial to experience when the user views the virtual-scene image in the second view.

With reference to the first aspect, in a possible design, the pose information includes information about a gaze point of the user in the first view. The information about the gaze point represents a position of the gaze point of the user in the first view. When the gaze point is located at a position of the real-scene image in the first view, the image quality of the virtual-scene image in the first view is better than the image quality of the virtual-scene image in the second view; or when the gaze point is located at a position of the virtual-scene image in the first view, the image quality of the real-scene image in the first view is better than the image quality of the real-scene image in the second view.

In this solution, because the information about the gaze point represents the position of the gaze point of the user in the first view, the electronic device may determine, based on the information about the gaze point of the user, whether content to which the user pays attention in the first view is the real-scene image or the virtual-scene image.

When the gaze point is located at the position of the real-scene image in the first view, the electronic device may determine that the content to which the user pays attention in the first view is the real-scene image. Therefore, the electronic device may adjust the first view by lowering the image quality of the virtual-scene image in the first view. The electronic device can reduce computing resources allocated to the virtual-scene image included in the first view by lowering the image quality of the virtual-scene image in the first view, to save computing resources of the electronic device. In addition, the electronic device can enhance visual effect of the real-scene image in the first view by lowering the image quality of the virtual-scene image in the first view, to meet a requirement of the user for differentiation of displayed content.

When the gaze point is located at the position of the virtual-scene image in the first view, the electronic device may determine that the content to which the user pays attention in the first view is the virtual-scene image. Therefore, the electronic device may adjust the first view by lowering the image quality of the real-scene image in the first view. The electronic device can reduce computing resources allocated to the real-scene image included in the first view by lowering the image quality of the real-scene image in the first view, to save computing resources of the electronic device. In addition, the electronic device can enhance visual effect of the virtual-scene image in the first view by lowering the image quality of the real-scene image in the first view, to meet a requirement of the user for differentiation of displayed content.

With reference to the first aspect, in a possible design, the pose information includes head rotation information of the user. The head rotation information of the user includes a rotation angle of a head of the user in a horizontal direction and a rotation angle of the head of the user in a vertical direction. When the rotation angle of the head of the user in the horizontal direction is greater than a first threshold, and/or the rotation angle of the head of the user in the vertical direction is greater than a second threshold, the image quality of the virtual-scene image in the first view is better than the image quality of the virtual-scene image in the second view; or when the rotation angle of the head of the user in the horizontal direction is less than or equal to a first threshold, and the rotation angle of the head of the user in the vertical direction is less than or equal to a second threshold, the image quality of the real-scene image in the first view is better than the image quality of the real-scene image in the second view.

In this solution, the electronic device may determine whether the content to which the user pays attention in the first view is the real-scene image or the virtual-scene image based on a scenario in which the user obtains a real-scene image corresponding to an image of an environment in the real world, for example, a scenario in which the user looks down at a physical object such as a mobile phone, a tablet computer, or paper materials, a scenario in which the user looks up at the sky, a scenario in which the user walks with the head down, or a scenario in which the user turns the head left and right to view a surrounding environment.

After the electronic device displays the first view, if it is detected that the rotation angle of the head of the user in the horizontal direction is greater than the first threshold, and/or the rotation angle of the head of the user in the vertical direction is greater than the second threshold, it may be determined that the content to which the user pays attention in the first view is the real-scene image. Therefore, the electronic device may adjust the first view by lowering the image quality of the virtual-scene image in the first view. The electronic device can reduce computing resources allocated to the virtual-scene image included in the first view by lowering the image quality of the virtual-scene image in the first view, to save computing resources of the electronic device. In addition, the electronic device can enhance visual effect of the real-scene image in the first view by lowering the image quality of the virtual-scene image in the first view, to meet a requirement of the user for differentiation of displayed content.

After the electronic device displays the first view, if it is detected that the rotation angle of the head of the user in the horizontal direction is less than or equal to the first threshold, and the rotation angle of the head of the user in the vertical direction is less than or equal to the second threshold, it may be determined that the content to which the user pays attention in the first view is the virtual-scene image. Therefore, the electronic device may adjust the first view by lowering the image quality of the real-scene image in the first view. The electronic device can reduce computing resources allocated to the real-scene image included in the first view by lowering the image quality of the real-scene image in the first view, to save computing resources of the electronic device. In addition, the electronic device can enhance visual effect of the virtual-scene image in the first view by lowering the image quality of the real-scene image in the first view, to meet a requirement of the user for differentiation of displayed content.

With reference to the first aspect, in a possible design, the pose information includes movement information of the user. The movement information of the user represents a head movement trajectory of the user. When a movement distance of the head of the user is greater than a preset distance, the image quality of the virtual-scene image in the first view is better than the image quality of the virtual-scene image in the second view; or when a movement distance of the head of the user is less than or equal to a preset distance, the image quality of the real-scene image in the first view is better than the image quality of the real-scene image in the second view. The movement distance of the head of the user is obtained based on the movement information of the user.

In this solution, because the movement information of the user represents the head movement trajectory of the user, the electronic device may determine the movement distance of the head of the user based on the movement information of the user. The electronic device may determine, based on the movement distance of the head of the user, whether the content to which the user pays attention in the first view is the real-scene image or the virtual-scene image.

If the electronic device determines that the movement distance of the head of the user is greater than the preset distance, the electronic device may determine that the content to which the user pays attention in the first view is the real-scene image. Therefore, the electronic device may adjust the first view by lowering the image quality of the virtual-scene image in the first view. The electronic device can reduce computing resources allocated to the virtual-scene image included in the first view by lowering the image quality of the virtual-scene image in the first view, to save computing resources of the electronic device. In addition, the electronic device can enhance visual effect of the real-scene image in the first view by lowering the image quality of the virtual-scene image in the first view, to meet a requirement of the user for differentiation of displayed content.

If the electronic device determines that the movement distance of the head of the user is less than or equal to the preset distance, the electronic device may determine that the content to which the user pays attention in the first view is the virtual-scene image. Therefore, the electronic device may adjust the first view by lowering the image quality of the real-scene image in the first view. The electronic device can reduce computing resources allocated to the real-scene image included in the first view by lowering the image quality of the real-scene image in the first view, to save computing resources of the electronic device. In addition, the electronic device can enhance visual effect of the virtual-scene image in the first view by lowering the image quality of the real-scene image in the first view, to meet a requirement of the user for differentiation of displayed content.

With reference to the first aspect, in a possible design, a target application in the electronic device corresponds to at least one application view, and the at least one application view includes a third view. The electronic device may display a setting interface before the displaying the first view. The setting interface is configured to set a rendering strategy for the at least one application view. The rendering strategy is used to adjust a to-be-rendered view. The electronic device may receive a first trigger operation input by the user in the setting interface. The first trigger operation indicates to set the rendering strategy for the at least one application view to a target rendering strategy. The electronic device sets the rendering strategy for the at least one application view to the target rendering strategy in response to the first trigger operation.

In this solution, the electronic device may provide, for the user, the setting interface configured to set the rendering strategy for the at least one application view, to meet a requirement of the user for differentiation of displayed content of each application view.

With reference to the first aspect, in a possible design, the electronic device may receive a second trigger operation input by the user. The second trigger operation indicates to display the third view. The electronic device adjusts the third view based on the target rendering strategy in response to the second trigger operation. Then, the electronic device may display the first view obtained based on the adjustment to the third view.

In this solution, the electronic device may render each application view based on a rendering strategy customized by the user for each application view, to meet a requirement of the user for differentiation of displayed content of each application view.

With reference to the first aspect, in a possible design, the rendering strategy includes a first rendering strategy and a second rendering strategy. The second view is obtained based on the adjustment to the first view that is made by using the rendering strategy. The first rendering strategy includes reducing a rendering parameter of a virtual-scene image included in the to-be-rendered view. The second rendering strategy includes reducing a rendering parameter of a real-scene image included in the to-be-rendered view. The rendering parameter includes at least one of a definition parameter, a resolution parameter, a color saturation parameter, a brightness parameter, a color temperature parameter, or a contrast parameter.

In this solution, a possible setting manner for the rendering strategy is provided.

With reference to the first aspect, in a possible design, the first rendering strategy further includes: increasing the rendering parameter of the real-scene image included in the to-be-rendered view; shrinking the virtual-scene image included in the to-be-rendered view; moving the virtual-scene image included in the to-be-rendered view toward an edge of the to-be-rendered view; and/or increasing at least one of the image shooting frame rate or the shutter speed of the camera. The real-scene image included in the to-be-rendered view is obtained based on the camera.

In this solution, a possible setting manner for the first rendering strategy is provided. The electronic device adjusts the to-be-rendered view by using the first rendering strategy. In this case, visual effect of the real-scene image in the to-be-rendered view can be enhanced, and visual effect of the virtual-scene image in the to-be-rendered view can be weakened. This meets a requirement of the user for differentiation of displayed content of the electronic device, and is beneficial to experience when the user views the real-scene image in the to-be-rendered view. In addition, the electronic device can save computing resources of the electronic device by reducing computing resources allocated to the virtual-scene image included in the to-be-rendered view.

With reference to the first aspect, in a possible design, the second rendering strategy includes: increasing the rendering parameter of the virtual-scene image included in the to-be-rendered view; enlarging the virtual-scene image included in the to-be-rendered view; moving the virtual-scene image included in the to-be-rendered view toward a center of the to-be-rendered view; and/or reducing at least one of the image shooting frame rate or the shutter speed of the camera. The real-scene image included in the to-be-rendered view is obtained based on the camera.

In this solution, a possible setting manner for the second rendering strategy is provided. The electronic device adjusts the to-be-rendered view by using the second rendering strategy. In this case, visual effect of the virtual-scene image in the to-be-rendered view can be enhanced, and visual effect of the real-scene image in the to-be-rendered view can be weakened. This meets a requirement of the user for differentiation of displayed content of the electronic device, and is beneficial to experience when the user views the virtual-scene image in the to-be-rendered view. In addition, the electronic device can save computing resources of the electronic device by reducing computing resources allocated to the real-scene image included in the to-be-rendered view.

According to a second aspect, an embodiment of this application provides an electronic device. The electronic device includes a memory and one or more processors. The memory is coupled to the processor. The memory is configured to store computer program code. The computer program code includes computer instructions. When the processor executes the computer instructions, the electronic device is enabled to perform the method according to the first aspect and any one of the possible design manners of the first aspect.

According to a third aspect, an embodiment of this application provides a chip system. The chip system includes one or more interface circuits and one or more processors. The interface circuit and the processor are interconnected through a line. The interface circuit is configured to receive a signal from a memory of an electronic device, and send the signal to the processor. The signal includes computer instructions stored in the memory. When the processor executes the computer instructions, the electronic device performs the method according to the first aspect and any one of the possible design manners of the first aspect.

According to a fourth aspect, an embodiment of this application provides a computer-readable storage medium, including computer instructions. When the computer instructions are run on an electronic device, the electronic device is enabled to perform the method according to the first aspect and any one of the possible design manners of the first aspect.

According to a fifth aspect, an embodiment of this application provides a computer program product. When the computer program product is run on a computer, the computer is enabled to perform the method according to the first aspect and any one of the possible design manners of the first aspect.

### BRIEF DESCRIPTION OF DRAWINGS

FIG. 1 is a diagram of a mixed reality image;
FIG. 2 is a diagram of a movie view displayed by an electronic device based on a foveated rendering technology;
FIG. 3 is a diagram of a mixed reality image displayed by an electronic device based on a foveated rendering technology;
FIG. 4 is a diagram of a hardware structure of an electronic device according to an embodiment of this application;
FIG. 5 is a diagram of a setting interface according to an embodiment of this application;
FIG. 6 is a diagram of adjusting a to-be-rendered view according to an embodiment of this application;
FIG. 7 is another diagram of adjusting a to-be-rendered view according to an embodiment of this application;
FIG. 8 is a diagram of adjusting a first view according to an embodiment of this application;
FIG. 9 is another diagram of adjusting a first view according to an embodiment of this application;
FIG. 10 is a diagram of a module structure of an electronic device according to an embodiment of this application; and
FIG. 11 is a diagram of a structure of a display device according to an embodiment of this application.

### DESCRIPTION OF EMBODIMENTS

The following describes technical solutions in embodiments of this application with reference to accompanying drawings in embodiments of this application. In description of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature defined by "first" or "second" may explicitly or implicitly include one or more features. In the descriptions of embodiments, unless otherwise specified, "a plurality of" means two or more.

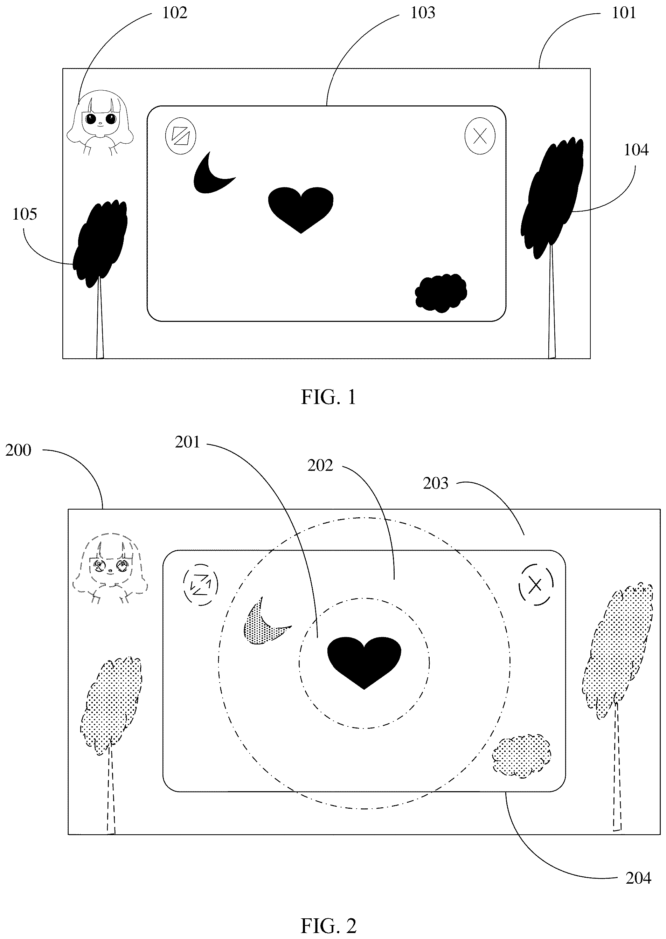

An MR device may sense a surrounding environment by using a camera, to obtain a corresponding environmental image. The obtained environmental image and a virtual image corresponding to virtual content are superimposed, so that an MR image can be obtained and displayed. For example, with reference to FIG. 1, an MR image 101 includes virtual-scene images (for example, an image 102 and an image 103) and real-scene images (for example, an image 104 and an image 105).

The virtual content is a digital signal that corresponds to the virtual image and that is pre-stored in the MR device or obtained by the MR device from an input source. The virtual image may include at least one of a virtual human image, a virtual animal or plant image, or a virtual object image. For example, still with reference to FIG. 1, the MR image 101 includes a virtual human image 102 and a virtual display image 103. The MR device may play media resources in a display range of the virtual display image 103, so that the user can have movie watching experience when wearing the MR device and gazing at the virtual display image 103.

Because both a field of view and attention of the user are limited, when using the MR device, the user pays attention to a part of view in the MR image, and ignores another part of view in the MR image. For example, when using the MR device to watch a movie, the user pays more attention to a movie view in an MR image, and ignores another view. Alternatively, when wearing the MR device and walking, the user pays more attention to an environmental image that is in an MR image and that corresponds to an environment around the MR device, and ignores a virtual image corresponding to virtual content and the like.

However, when rendering an MR image, the MR device usually uses same computing resources to render regions in a same frame of MR image. In this case, because the user ignores a part of view in the MR image, if same computing resources are used to render a view that is ignored by the user and a view to which the user pays attention in the MR image, a waste of computing resources is caused.

In a technology, a central region (which may also be referred to as a gaze region in embodiments of this application) of a view that is in an MR image and that falls into a field of view of the user may be determined, and the MR image is rendered based on the gaze region of the user and a foveated rendering technology. The foveated rendering technology is to render a view region corresponding to the gaze region of the user in the MR image at a higher definition and render a view region away from the gaze region of the user at a lower definition, so that computing resources of the MR device can be saved.

For example, with reference to FIG. 2, an MR image 200 includes a region 201, a region 202, and a region 203. The region 201 is the gaze region of the user. The MR device may render the region 201 at a definition of 100%, render the region 202 at a definition of 70%, and render the region 203 at a definition of 40%, so that computing resources of the MR device can be saved.

However, rendering the MR image based on the gaze region of the user and the foveated rendering technology cannot meet a requirement of the user for differentiation of displayed content, and is not beneficial to user experience.

For example, when the user uses the MR device to watch a movie, if an MR image is rendered based on the gaze region of the user and the foveated rendering technology, the MR image may be shown in FIG. 2. The MR image 200 includes a movie view 204, and regions in the movie view 204 correspond to different definitions, affecting experience when the user uses the MR device to watch the movie.

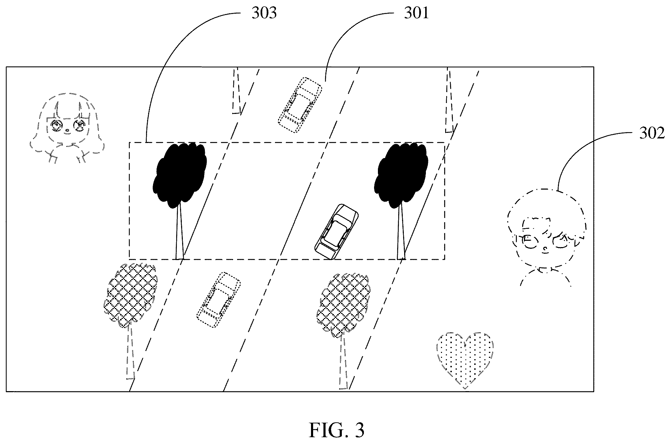

For another example, when the user wears the MR device and walks, if an MR image is rendered based on the gaze region of the user and the foveated rendering technology, the MR image may include, as shown in FIG. 3, an environment view 301 corresponding to an environment around the MR device and a virtual view 302 corresponding to virtual content. Definitions of a view region corresponding to a gaze region 303 of the user to a view region away from the gaze region 303 of the user gradually decrease. When wearing the MR device and walking, the user pays more attention to the environmental image that is in the MR image and that corresponds to the environment around the MR device. As a result, rendering the MR image based on the gaze region of the user and the foveated rendering technology by the MR device cannot provide a clear and complete environmental image for the user, affecting experience when the user wears the MR device and walks.

Based on the foregoing problem, embodiments of this application provide a display method. The display method may be applied to an electronic device. The electronic device may display a first view including a real-scene image and a virtual-scene image. The real-scene image is obtained based on an environmental image corresponding to an environment around the electronic device, and the virtual-scene image includes a virtual image corresponding to virtual content. The electronic device may obtain pose information of a user, and display a second view based on the pose information of the user. The second view is obtained based on an adjustment to the first view. Image quality of the virtual-scene image in the first view is better than image quality of a virtual-scene image in the second view, or image quality of the real-scene image in the first view is better than image quality of a real-scene image in the second view.

It should be noted that the pose information of the user in embodiments of this application may include information about a gaze point of the user in the first view, head rotation information of the user, and movement information of the user. The pose information of the user may reflect content to which the user pays attention in the first view.

If the content to which the user pays attention in the first view is the real-scene image, the electronic device may enhance visual effect of the real-scene image in the first view and weaken visual effect of the virtual-scene image in the first view by adjusting the first view. This meets a requirement of the user for differentiation of displayed content of the electronic device, and is beneficial to experience when the user views the real-scene image in the second view. In addition, the electronic device can save computing resources of the electronic device by reducing computing resources allocated to the virtual-scene image included in the first view.

If the content to which the user pays attention in the first view is the virtual-scene image, the electronic device may enhance visual effect of the virtual-scene image in the first view and weaken visual effect of the real-scene image in the first view by adjusting the first view. This meets a requirement of the user for differentiation of displayed content of the electronic device, and is beneficial to experience when the user views the virtual-scene image in the second view. In addition, the electronic device can save computing resources of the electronic device by reducing computing resources allocated to the real-scene image included in the first view.

For example, the electronic device provided in embodiments of this application may be a wearable device having an MR function, such as MR glasses or an MR helmet. The electronic device provided in embodiments of this application may alternatively be a non-wearable device having an MR function, such as a mobile phone, a tablet computer, a desktop computer, a laptop computer, a handheld computer, a notebook computer, a vehicle-mounted device, an ultra-mobile personal computer (ultra-mobile personal computer, UMPC), or a netbook.

When the electronic device provided in embodiments of this application is a non-wearable device having an MR function, the electronic device may be used in cooperation with augmented reality (augmented reality, AR)/MR glasses. For example, the electronic device may receive an MR scene video stream, and the AR/MR glasses may display an MR scene video.

In addition, the electronic device in embodiments of this application may alternatively be a personal digital assistant (personal digital assistant, PDA), an AR device, or the like. A specific form of the electronic device is not specially limited in embodiments of this application.

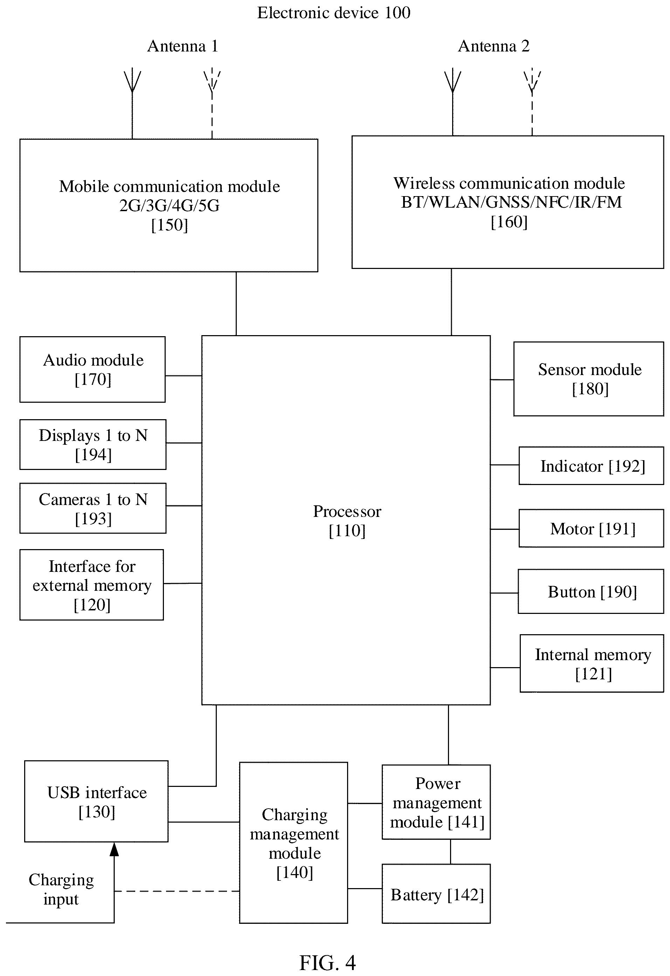

FIG. 4 is a diagram of a structure of an electronic device 100 according to an embodiment of this application. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input of the battery 142 and/or an input of the charging management module 140, and supplies power to the processor 110, the internal memory 121, an external memory, the display 194, the camera 193, the wireless communication module 160, and the like. The power management module 141 may be further configured to monitor a parameter such as a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to a speaker 170A, a receiver 170B, and the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV.

In some embodiments, the electronic device 100 may include one or N cameras 193, where N is a positive integer greater than 1. For example, the camera 193 may include a first camera configured to shoot an image of an environment in the real world and a second camera configured to shoot an eye image of a user. The electronic device may obtain an MR image based on the environmental image shot by the first camera and a virtual image corresponding to virtual content. The electronic device may determine a position of a gaze point of the user in the MR image based on the eye image of the user shot by the second camera.

In some embodiments, the camera 193 may include the second camera configured to shoot the eye image of the user, but does not include the first camera configured to shoot the image of the environment in the real world. In this case, the electronic device may be connected to an external first camera. The electronic device may obtain an image of an environment in the real world based on the external first camera.

In some other embodiments, the camera 193 may include the first camera configured to shoot the image of the environment in the real world, but does not include the second camera configured to shoot the eye image of the user. In this case, the electronic device may be connected to an external second camera. The electronic device may obtain an eye image of the user based on the external second camera. The electronic device may determine a position of a gaze point of the user in an MR image based on the eye image of the user.

The digital signal processor is configured to process a digital signal, and may process another digital signal in addition to a digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the electronic device 100 may be implemented through the NPU, for example, image recognition, facial recognition, eye movement recognition, speech recognition, and text understanding.

The interface 120 for external memory may be configured to connect to an external storage card, for example, a micro SD card, to extend a storage capability of the electronic device 100. The external storage card communicates with the processor 110 through the interface 120 for external memory, to implement a data storage function. For example, files such as music and videos are stored in the external storage card. For another example, a rendering strategy for an application view corresponding to each application in the electronic device is stored in the external storage card. When rendering an application view corresponding to a target application, the electronic device may invoke a corresponding rendering strategy from the external storage card, and render the corresponding application view based on the invoked rendering strategy.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage region and a data storage region. The program storage region may store an operating system, an application required by at least one function (for example, a sound playing function or an image playing function), and the like. The data storage region may store data (for example, audio data, a phone book, and a rendering strategy for an application view corresponding to each application in the electronic device) created in a process of using the electronic device 100, and the like. In addition, the internal memory 121 may include a high-speed random access memory, or may further include a nonvolatile memory, for example, at least one magnetic disk storage device, a flash storage device, or a universal flash storage (universal flash storage, UFS).

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some functional modules of the audio module 170 are disposed in the processor 110.

The sensor module 180 may include a pressure sensor, a gyroscope sensor, an accelerometer sensor, a barometric pressure sensor, a magnetic sensor, a distance sensor, an optical proximity sensor, a fingerprint sensor, a temperature sensor, a touch sensor, an ambient light sensor, a bone conduction sensor, and the like.

The accelerometer sensor may detect accelerations in various directions (usually on three axes) of the electronic device. When the electronic device is static, a magnitude and a direction of gravity may be detected. The accelerometer sensor may be further configured to identify a posture of a user wearing the electronic device, for example, identify a posture of the user during an action such as walking, jumping, crouching, or standing up.

For example, all technical solutions in the following embodiments may be implemented in an electronic device having the foregoing hardware architecture. With reference to the accompanying drawings and application scenarios, the following describes in detail the display method provided in embodiments of this application.

In some embodiments, an electronic device may obtain an image of an environment around the electronic device. The electronic device may obtain a to-be-rendered view based on the obtained environmental image and a virtual image corresponding to virtual content (for example, a virtual human, a virtual animal or plant, or a virtual object). The electronic device may render the to-be-rendered view, to display an MR image corresponding to the to-be-rendered view.

The MR image displayed by the electronic device includes a real-scene image and a virtual-scene image. The real-scene image includes an image of an environment around the electronic device, and the virtual-scene image includes a virtual image corresponding to virtual content.

In some embodiments, the electronic device may obtain an image of an environment around the electronic device based on a first camera. The electronic device may include the first camera. In other words, the first camera is a part of the electronic device. For example, the first camera is embedded in the electronic device. Alternatively, the electronic device may not include the first camera. In other words, the first camera may be independent of the electronic device. For example, the electronic device may be connected to an external first camera through a USB interface.

In some embodiments, the electronic device has a rendering customization function. The rendering customization function means that the electronic device supports a user in setting a rendering strategy of the electronic device. The rendering strategy is used to adjust a to-be-rendered view. The user may set, based on the rendering customization function of the electronic device, a rendering strategy for an application view corresponding to each application in the electronic device. An application view rendered by the electronic device based on a rendering strategy set by the user better conforms to viewing habits of the user, and is beneficial to user experience.

In some embodiments, the electronic device may display a setting interface. The setting interface is configured to set a rendering strategy for at least one application view corresponding to a target application. The target application may be any application included in the electronic device. The user may input, in the setting interface, a first trigger operation indicating to set the rendering strategy for the at least one application view corresponding to the target application to a target rendering strategy. The electronic device may set the rendering strategy for the at least one application view corresponding to the target application to the target rendering strategy in response to the first trigger operation.

Then, if the electronic device receives a second trigger operation that is input by the user and that indicates to display a third view, for example, a selection operation performed by the user on a link used to jump to and display the third view, the electronic device may adjust the third view based on the target rendering strategy in response to the second trigger operation. The electronic device renders an adjusted third view, and may display a first view. The first view is obtained based on the adjustment to the third view, and the at least one application view corresponding to the target application includes the third view.

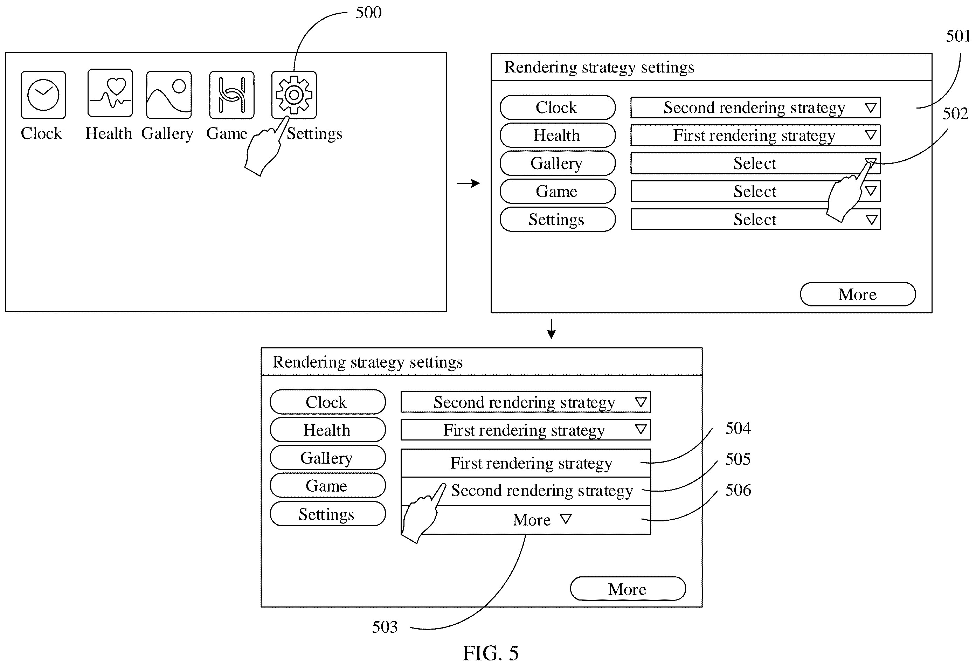

For example, with reference to FIG. 5, an application 500 may be installed on the electronic device. The application 500 is configured to set a rendering strategy for an application view corresponding to each application in the electronic device. The electronic device receives a selection operation that is input by the user and that is performed on the application 500 (for example, the user taps an icon corresponding to the application 500), and may display a setting interface 501. The setting interface 501 includes at least one setting control (for example, a control 502). Any setting control corresponds to one application in the electronic device. The setting control is configured to set a rendering strategy for an application view of the corresponding application.

The user may perform a selection operation on the control 502 corresponding to the target application, and the electronic device may display a setting menu 503 in response to the selection operation performed by the user on the control 502. The setting menu 503 includes a plurality of rendering strategy items (for example, an item 504, an item 505, and an item 506). Each rendering strategy item corresponds to one rendering strategy. The user may perform a selection operation on the item 505, and the electronic device may set, in response to the selection operation performed by the user on the item 505, a rendering strategy for an application view corresponding to the target application (for example, Gallery) to a rendering strategy corresponding to the item 505.

Then, when the electronic device renders the application view corresponding to the target application, for example, when the electronic device renders the third view corresponding to Gallery, the electronic device may adjust the third view based on the rendering strategy corresponding to the item 505, and render an adjusted third view, to display the first view.

It should be noted that, the selection operation performed by the user on the item 505 indicates to set the rendering strategy for the application view corresponding to the target application to the rendering strategy corresponding to the item 505, and the first trigger operation in embodiments of this application indicates to set the rendering strategy for the at least one application view corresponding to the target application to the target rendering strategy. Therefore, the first trigger operation in embodiments of this application includes the selection operation performed by the user on the item 505 in the foregoing example.

In some embodiments, the rendering strategy includes at least a first rendering strategy and a second rendering strategy. The first rendering strategy is used to adjust a virtual-scene image included in the to-be-rendered view, to reduce computing resources allocated to the virtual-scene image included in the to-be-rendered view. The second rendering strategy is used to adjust a real-scene image included in the to-be-rendered view, to reduce computing resources allocated to the real-scene image included in the to-be-rendered view. For descriptions of the real-scene image and the virtual-scene image, refer to the descriptions of the foregoing embodiments. Details are not described herein again.

In some embodiments, the first rendering strategy includes reducing a rendering parameter of the virtual-scene image included in the to-be-rendered view. The rendering parameter may include at least one of a definition parameter, a resolution parameter, a color saturation parameter, a brightness parameter, a color temperature parameter, or a contrast parameter.

When the electronic device renders the to-be-rendered view, if only the rendering parameter of the virtual-scene image included in the to-be-rendered view is reduced, computing resources allocated by the electronic device for rendering the virtual-scene image included in the to-be-rendered view are also reduced. Therefore, rendering the to-be-rendered view based on the first rendering strategy can save computing resources.

In some embodiments, the first rendering strategy includes increasing a rendering parameter of the real-scene image included in the to-be-rendered view. When the electronic device renders the to-be-rendered view, if only the rendering parameter of the real-scene image included in the to-be-rendered view is increased, computing resources allocated by the electronic device for rendering the real-scene image included in the to-be-rendered view are also increased, and image quality of a real-scene image in a view obtained through rendering is also improved. This can improve experience when the user views the real-scene image included in the to-be-rendered view.

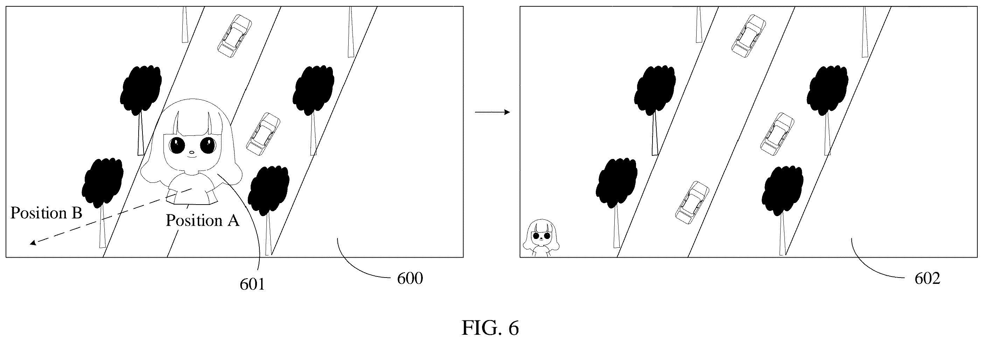

In some embodiments, the first rendering strategy further includes reducing an area of the virtual-scene image included in the to-be-rendered view. For example, with reference to FIG. 6, an area of a virtual-scene image 601 included in a to-be-rendered view 600 may be reduced, to obtain an adjusted to-be-rendered view 602. The electronic device reduces the area of the virtual-scene image in the to-be-rendered view, so that an area in which the virtual-scene image occludes the real-scene image in the to-be-rendered view can be reduced. This can improve experience when the user views the real-scene image included in the to-be-rendered view.

In some embodiments, the first rendering strategy further includes moving the virtual-scene image included in the to-be-rendered view toward an edge of the to-be-rendered view. For example, still with reference to FIG. 6, the virtual-scene image 601 included in the to-be-rendered view 600 may be moved from a position A to a position B. The electronic device adjusts a position of the virtual-scene image included in the to-be-rendered view, so that the virtual-scene image can be away from a center of a field of view of the user. This improves experience when the user views the real-scene image included in the to-be-rendered view.

In some embodiments, the first rendering strategy includes making a first adjustment to a shooting parameter of the first camera. For descriptions of the first camera, refer to the descriptions of the foregoing embodiments. Details are not described herein again. The first adjustment includes increasing at least one of a shooting frame rate or a shutter speed of the first camera.

When the first camera obtains an image of an environment around the electronic device, if only the image shooting frame rate and/or the shutter speed of the first camera are/is increased, a time interval between obtaining two adjacent frames of environmental images by the first camera is also shorter. In other words, in a same time, the first camera may obtain more environmental images. Because the real-scene image in the to-be-rendered image is obtained based on an environment obtained by the first camera, a larger quantity of environmental images obtained by the first camera indicates more image resources that can be provided for generation of the real-scene image, and better image quality of the obtained real-scene image. This can improve experience when the user views the real-scene image.

In some embodiments, the first rendering strategy further includes performing optimization processing on the environmental image obtained by the first camera. The optimization processing is processing used to improve image quality of the environmental image obtained by the first camera. For example, the optimization processing includes noise reduction processing, ghost removal processing, dynamic range enhancement processing, hole filling processing, or the like. Specific content and a specific implementation method of the optimization processing are not limited in embodiments of this application.

Higher image quality of the environmental image indicates higher image quality of the real-scene image that is included in the to-be-rendered view and that is obtained based on the environmental image. Therefore, performing the optimization processing on the environmental image can improve the image quality of the environmental image, to improve the image quality of the real-scene image included in the to-be-rendered view. This can improve experience when the user views the real-scene image. This can improve experience when the user views the real-scene image.

In some embodiments, the second rendering strategy includes reducing the rendering parameter of the real-scene image included in the to-be-rendered view. When the electronic device renders the to-be-rendered view, if only the rendering parameter of the real-scene image included in the to-be-rendered view is reduced, computing resources allocated by the electronic device for rendering the real-scene image included in the to-be-rendered view are also reduced. Therefore, rendering the to-be-rendered view based on the second rendering strategy can save computing resources.

In some embodiments, the second rendering strategy includes increasing the rendering parameter of the virtual-scene image included in the to-be-rendered view. When the electronic device renders the to-be-rendered view, if only the rendering parameter of the virtual-scene image included in the to-be-rendered view is increased, computing resources allocated by the electronic device for rendering the virtual-scene image included in the to-be-rendered view are also increased, and image quality of a virtual-scene image in a view obtained through rendering is also improved. This can improve experience when the user views the virtual-scene image included in the to-be-rendered view.

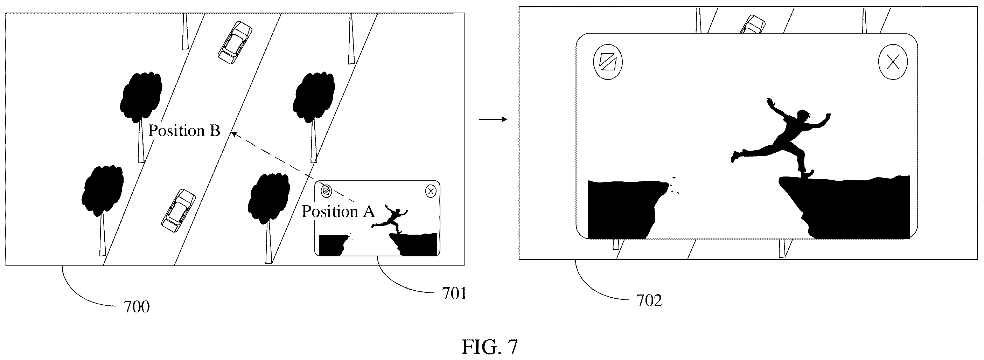

In some embodiments, the second rendering strategy further includes enlarging the virtual-scene image included in the to-be-rendered view. For example, with reference to FIG. 7, a virtual-scene image 701 included in a to-be-rendered view 700 may be enlarged, to obtain an adjusted to-be-rendered view 702. Enlarging the virtual-scene image in the to-be-rendered view by the electronic device can improve experience when the user views the virtual-scene image included in the to-be-rendered view.

In some embodiments, the second rendering strategy further includes moving the virtual-scene image included in the to-be-rendered view toward a center of the to-be-rendered view. For example, still with reference to FIG. 7, the virtual-scene image 701 included in the to-be-rendered view 700 may be moved from a position A to a position B. Moving the virtual-scene image included in the to-be-rendered view to a position close to the center of the to-be-rendered view by the electronic device can improve experience when the user views the virtual-scene image included in the to-be-rendered view.

In some embodiments, the second rendering strategy includes making a second adjustment to the shooting parameter of the first camera. For descriptions of the first camera, refer to the descriptions of the foregoing embodiments. Details are not described herein again. The second adjustment includes reducing at least one of the image shooting frame rate or the shutter speed of the first camera.

When the first camera obtains an image of an environment around the electronic device, if only the image shooting frame rate and/or the shutter speed of the first camera are/is reduced, computing resources that the first camera needs to invoke when the first camera shoots the image of the environment around the electronic device are also reduced, so that computing resources of the first camera can be saved.

In some embodiments, after displaying a target view, the electronic device may obtain pose information of the user. The electronic device may determine, based on the obtained pose information of the user, whether to switch the rendering strategy. If the electronic device determines to switch the rendering strategy, the electronic device may adjust the target view based on a rendering strategy obtained through the switching, to display an adjusted target view. The target view may be any view corresponding to any application. For example, the target view may be a desktop view corresponding to a desktop application. For another example, the target view may be a first view corresponding to a target application, or the like. This is not limited in embodiments of this application.

For ease of description, an example in which the target view is a first view corresponding to a first application is used below to describe in detail determining, by the electronic device based on the pose information of the user, whether to switch the rendering strategy and how the electronic device adjusts the first view based on a rendering strategy obtained through the switching.

In some embodiments, the pose information of the user includes information about a gaze point of the user in the first view. The information about the gaze point of the user in the first view represents a position of the gaze point of the user in the first view. The following describes in detail a method for the electronic device to automatically switch the rendering strategy based on the information about the gaze point of the user in the first view.

In some embodiments, the electronic device may include a second camera, or the electronic device may be connected to an external second camera. The second camera is configured to obtain an eye image of the user. The electronic device may obtain, based on a second target model, eye feature point information included in the eye image of the user. The second target model is configured to analyze an input eye image, to output eye feature point information corresponding to the eye image. The electronic device may determine the information about the gaze point of the user in the first view based on the obtained eye feature point information and a target algorithm (for example, an eye movement algorithm).

It should be noted that a manner in which the electronic device obtains the information about the gaze point of the user in the first view is not limited in embodiments of this application. The electronic device may determine the information about the gaze point of the user in the first view based on the eye feature point information of the user in the foregoing embodiment. The electronic device may alternatively determine the information about the gaze point of the user in the first view by using an infrared detection technology, a detector (for example, a muscle current detector) configured to identify rotation of an eyeball of the user, or another manner.

In some embodiments, the electronic device may determine the position of the gaze point of the user in the first view based on the information about the gaze point of the user. When the rendering strategy used before the electronic device obtains the information about the gaze point of the user is the first rendering strategy, after the electronic device obtains the information about the gaze point of the user, if the electronic device determines that the gaze point of the user is located at a position of a real-scene image included in the first view, the electronic device determines not to switch the rendering strategy. In other words, the electronic device does not adjust the first view. For descriptions of the first rendering strategy, refer to the descriptions of the foregoing embodiments. Details are not described herein again.

In some embodiments, when the rendering strategy used before the electronic device obtains the information about the gaze point of the user is the second rendering strategy, after the electronic device obtains the information about the gaze point of the user, if the electronic device determines that the gaze point of the user is located at a position of a virtual-scene image included in the first view, the electronic device determines not to switch the rendering strategy. In other words, the electronic device does not adjust the first view.

In some embodiments, when the rendering strategy used before the electronic device obtains the information about the gaze point of the user is not the first rendering strategy, after the electronic device obtains the information about the gaze point of the user, if the electronic device determines that the gaze point of the user is located at the position of the real-scene image included in the first view, it indicates that the user pays more attention to the real-scene image included in the first view. The electronic device may switch the rendering strategy to the first rendering strategy, and adjust the first view based on the first rendering strategy, to display a second view.

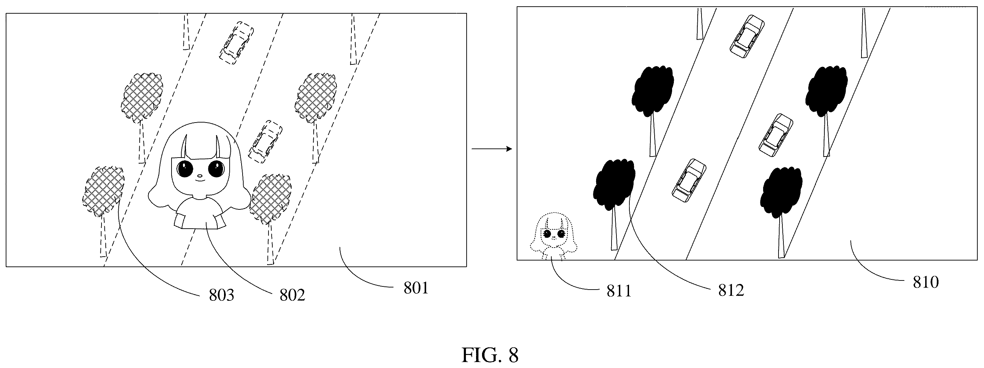

In some embodiments, the first rendering strategy includes reducing the rendering parameter of the virtual-scene image included in the to-be-rendered view. In other words, the first rendering strategy includes reducing a rendering parameter of the virtual-scene image included in the first view. Therefore, with reference to FIG. 8, image quality of a virtual-scene image 802 included in a first view 801 is better than image quality of a virtual-scene image 811 included in a second view 810. In other words, the electronic device may highlight visual effect of the real-scene image included in the first view by weakening visual effect of the virtual-scene image included in the first view. The electronic device may render an adjusted first view, to display the second view. In comparison with viewing the first view, the user has better experience when viewing a real-scene image included in the second view.

In some embodiments, the first rendering strategy includes increasing the rendering parameter of the real-scene image included in the to-be-rendered view. In other words, the first rendering strategy includes increasing a rendering parameter of the real-scene image included in the first view. Therefore, with reference to FIG. 8, image quality of a real-scene image 812 included in the second view 810 is better than image quality of a real-scene image 803 included in the first view 801. In other words, the electronic device may enhance visual effect of the real-scene image included in the first view. The electronic device may render an adjusted first view, to display the second view. In comparison with viewing the first view, the user has better experience when viewing the real-scene image included in the second view.

In some embodiments, the first rendering strategy includes shrinking the virtual-scene image included in the to-be-rendered view. In other words, the first rendering strategy includes shrinking the virtual-scene image included in the first view. Therefore, with reference to FIG. 8, an area of the virtual-scene image 811 included in the second view 810 is less than an area of the virtual-scene image 802 included in the first view 801. In other words, the electronic device may weaken visual effect of the virtual-scene image included in the first view. The electronic device may render an adjusted first view, to display the second view. In comparison with viewing the first view, the user has better experience when viewing the real-scene image included in the second view.

In some embodiments, the first rendering strategy includes moving the virtual-scene image included in the to-be-rendered view toward the edge of the to-be-rendered view. In other words, the first rendering strategy includes moving the virtual-scene image included in the first view toward an edge of the first view. Therefore, with reference to FIG. 8, a distance between the virtual-scene image 811 included in the second view 810 and an edge of the second view 810 is less than a distance between the virtual-scene image 802 in the first view 801 and an edge of the first view 801. In other words, the electronic device may move the virtual-scene image included in the first view to a position close to the edge of the first view, to weaken visual effect of the virtual-scene image included in the first view. The electronic device may render an adjusted first view, to display the second view. In comparison with viewing the first view, the user has better experience when viewing the real-scene image included in the second view.

In some embodiments, the first rendering strategy includes increasing the image shooting frame rate and/or the shutter speed of the first camera. Therefore, the first camera may obtain more environmental images. A larger quantity of environmental images obtained by the first camera indicates more image resources that can be provided for generation of a real-scene image, and better image quality of the generated real-scene image. In comparison with viewing the first view, the user has better experience when viewing the real-scene image included in the second view.

In some embodiments, the first rendering strategy includes performing the optimization processing on the environmental image obtained by the first camera. Therefore, image quality of the real-scene image that is included in the to-be-rendered view and that is obtained based on an optimized environmental image is also higher. In comparison with viewing the first view, the user has better experience when viewing the real-scene image included in the second view.

In some embodiments, when the rendering strategy used before the electronic device obtains the information about the gaze point of the user is not the second rendering strategy, after the electronic device obtains the information about the gaze point of the user, if the electronic device determines that the gaze point of the user is located at the position of the virtual-scene image included in the first view, it indicates that the user pays more attention to the virtual-scene image included in the first view. The electronic device may switch the rendering strategy to the second rendering strategy, and adjust the first view based on the second rendering strategy, to display the second view.

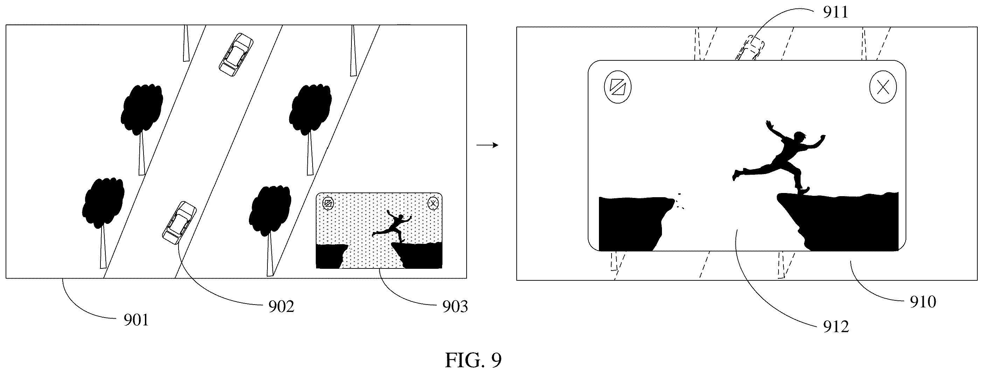

In some embodiments, the second rendering strategy includes reducing the rendering parameter of the real-scene image included in the to-be-rendered view. In other words, the second rendering strategy includes reducing the rendering parameter of the real-scene image included in the first view. Therefore, with reference to FIG. 9, image quality of a real-scene image 902 included in a first view 901 is better than image quality of a real-scene image 911 included in a second view 910. In other words, the electronic device may highlight visual effect of a virtual-scene image included in an adjusted first view by weakening visual effect of the real-scene image included in the first view. The electronic device may render the adjusted first view, to display the second view. In comparison with viewing the first view, the user has better experience when viewing the virtual-scene image included in the second view.

In some embodiments, the second rendering strategy includes increasing the rendering parameter of the virtual-scene image included in the to-be-rendered view. In other words, the second rendering strategy includes increasing the rendering parameter of the virtual-scene image included in the first view. Therefore, with reference to FIG. 9, image quality of a virtual-scene image 912 included in the second view 910 is better than image quality of a virtual-scene image 903 included in the first view 901. In other words, the electronic device may enhance visual effect of the virtual-scene image included in the first view. The electronic device may render an adjusted first view, to display the second view. In comparison with viewing the first view, the user has better experience when viewing the virtual-scene image included in the second view.

In some embodiments, the second rendering strategy includes enlarging the virtual-scene image included in the to-be-rendered view. In other words, the second rendering strategy includes enlarging the virtual-scene image included in the first view. Therefore, with reference to FIG. 9, an area of the virtual-scene image 912 included in the second view 910 is greater than an area of the virtual-scene image 903 included in the first view 901. In other words, the electronic device may enhance visual effect of the virtual-scene image included in the first view. The electronic device may render an adjusted first view, to display the second view. In comparison with viewing the first view, the user has better experience when viewing the virtual-scene image included in the second view.

In some embodiments, the second rendering strategy includes moving the virtual-scene image included in the to-be-rendered view toward the center of the to-be-rendered view. In other words, the second rendering strategy includes moving the virtual-scene image included in the first view toward a center of the first view. Therefore, with reference to FIG. 9, a distance between the virtual-scene image 903 included in the first view 901 and an edge of the first view 901 is less than a distance between the virtual-scene image 912 in the second view 910 and an edge of the second view 910. In other words, the electronic device may move the virtual-scene image included in the first view to a position close to the center of the first view, to enhance visual effect of the virtual-scene image included in the first view. The electronic device may render an adjusted first view, to display the second view. In comparison with viewing the first view, the user has better experience when viewing the virtual-scene image included in the second view.

In some embodiments, the second rendering strategy includes reducing the image shooting frame rate and/or the shutter speed of the first camera. Therefore, computing resources that the first camera needs to invoke when the first camera shoots the image of the environment around the electronic device are also reduced, so that computing resources of the first camera can be saved.

In some embodiments, the pose information of the user includes head rotation information of the user. The head rotation information of the user includes a rotation angle of a head of the user in a horizontal direction and a rotation angle of the head of the user in a direction perpendicular to the horizontal direction (which may also be referred to as a vertical direction in embodiments of this application). The following describes in detail a method for the electronic device to automatically switch the rendering strategy of the electronic device based on the head rotation information of the user.

In some embodiments, the electronic device may obtain the head rotation information of the user based on a sensor (for example, an accelerometer sensor) configured to detect a rotation angle of the head of the user. The electronic device may alternatively determine the head rotation information of the user based on an image that is shot by a third camera and that includes the head of the user. A method for the electronic device to obtain the head rotation information of the user is not limited in embodiments of this application.

In some scenarios, the user may turn the head, to obtain a real-scene image corresponding to an image of an environment in the real world, for example, in a scenario in which the user looks down at a physical object such as a mobile phone, a tablet computer, or paper materials, a scenario in which the user looks up at the sky, a scenario in which the user walks with the head down, and a scenario in which the user turns the head left and right to view a surrounding environment. A scenario in which the user obtains an environmental image corresponding to an environment in the real world is not limited in embodiments of this application.

In some embodiments, a first preset condition may be set based on a scenario in which the user obtains a real-scene image corresponding to an image of an environment in the real world. After the electronic device displays the first view, if the electronic device determines that the head rotation information of the user meets the first preset condition, it indicates that the user pays more attention to the real-scene image corresponding to the image of the environment in the real world. In other words, the user pays more attention to the real-scene image in the first view. Therefore, the rendering strategy of the electronic device may be determined as the first rendering strategy. The electronic device may adjust the first view based on the first rendering strategy, to display the second view. For descriptions of the first rendering strategy, refer to the descriptions of the foregoing embodiments. Details are not described herein again.

In some embodiments, the first preset condition includes that the rotation angle of the head of the user in the horizontal direction is greater than a first threshold, and/or the rotation angle of the head of the user in the vertical direction is greater than a second threshold. The first threshold and the second threshold may be the same or may be different. For example, both the first threshold and the second threshold are 45°. For another example, the first threshold is 60°, and the second threshold is 45°. Specific values of the first threshold and the second threshold are not limited in embodiments of this application.

In some embodiments, a second preset condition may be set based on a scenario in which the user obtains a real-scene image corresponding to an image of an environment in the real world. After the electronic device displays the first view, if the electronic device determines that the head rotation information of the user meets the second preset condition, it indicates that the user pays more attention to a virtual-scene image corresponding to virtual content. In other words, the user pays more attention to the virtual-scene image in the first view. Therefore, the rendering strategy of the electronic device may be determined as the second rendering strategy. The electronic device may adjust the first view based on the second rendering strategy, to display the second view. For descriptions of the second rendering strategy, refer to the descriptions of the foregoing embodiments. Details are not described herein again.

In some embodiments, the second preset condition includes that the rotation angle of the head of the user in the horizontal direction is less than or equal to the first threshold, and the rotation angle of the head of the user in the vertical direction is less than or equal to the second threshold.

In some embodiments, the pose information of the user includes movement information of the user. The movement information of the user represents a head movement trajectory of the user. When the user performs an action such as walking, standing up, jumping, sitting down, or crouching, the head moves, and a head movement trajectory is generated. The following describes in detail a method for the electronic device to automatically switch the rendering strategy of the electronic device based on the rotation information of the user.

In some embodiments, the electronic device may obtain the movement information of the user based on a sensor (for example, an accelerometer sensor) configured to detect a movement trajectory of the head of the user. The electronic device may alternatively determine the movement information of the user based on an image that is shot by the third camera and that includes the head of the user. A method for the electronic device to obtain the head rotation information of the user is not limited in embodiments of this application.

In some embodiments, the electronic device may determine a movement distance of the head of the user based on the movement information of the user. If the electronic device determines that the movement distance of the head of the user is greater than a preset distance, it indicates that the user is performing an action such as walking, standing up, jumping, sitting down, or crouching. When performing these actions, the user pays more attention to the real-scene image corresponding to the image of the environment in the real world. In other words, the user pays more attention to the real-scene image in the first view. Therefore, the rendering strategy of the electronic device may be determined as the first rendering strategy. The electronic device may adjust the first view based on the first rendering strategy, to display the second view. For descriptions of the first rendering strategy, refer to the descriptions of the foregoing embodiments. Details are not described herein again.

If the electronic device determines that the movement distance of the head of the user is less than or equal to the preset distance, the rendering strategy of the electronic device may be determined as the second rendering strategy. The electronic device may adjust the first view based on the second rendering strategy, to display the second view. For descriptions of the second rendering strategy, refer to the descriptions of the foregoing embodiments. Details are not described herein again.

It should be noted that a person skilled in the art may set a value corresponding to the preset distance according to an actual scenario. For example, the preset distance is set to 0.4 meter. The value of the preset distance is not limited in embodiments of this application.

In embodiments of this application, the electronic device may determine, based on the pose information of the user, whether to switch the rendering strategy of the electronic device.

If the electronic device switches the rendering strategy to the first rendering strategy, the electronic device adjusts the first view based on the first rendering strategy. In this case, visual effect of the real-scene image in the first view can be enhanced, and visual effect of the virtual-scene image in the first view can be weakened. This meets a requirement of the user for differentiation of displayed content of the electronic device, and is beneficial to experience when the user views the real-scene image in the second view. In addition, the electronic device can save computing resources of the electronic device by reducing resources allocated to the virtual-scene image included in the first view.

If the electronic device switches the rendering strategy to the second rendering strategy, the electronic device adjusts the first view based on the second rendering strategy. In this case, visual effect of the virtual-scene image in the first view can be enhanced, and visual effect of the real-scene image in the first view can be weakened. This meets a requirement of the user for differentiation of displayed content of the electronic device, and is beneficial to experience when the user views the virtual-scene image in the second view. In addition, the electronic device can save computing resources of the electronic device by reducing resources allocated to the real-scene image included in the first view.

In some solutions, a plurality of embodiments of this application may be combined, and a combined solution is implemented. Optionally, some operations in procedures of the method embodiments are randomly combined, and/or a sequence of some operations is randomly changed. In addition, a sequence of performing steps of each procedure is merely an example, and does not constitute a limitation on the sequence of performing the steps. The steps may alternatively be performed in another sequence. It is not intended to indicate that the performing sequence is an only sequence in which these operations can be performed. A person of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

It may be understood that, to implement the foregoing functions, an electronic device includes corresponding hardware and/or software modules for performing the functions. Algorithm steps in examples described with reference to embodiments disclosed in this specification can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions with reference to embodiments for each particular application, but it shall not be considered that the implementation goes beyond the scope of this application.

In embodiments, the electronic device is divided into functional modules based on the foregoing method examples. For example, each functional module may be obtained through division based on each corresponding function, or two or more functions may be integrated into one processing module. The integrated module may be implemented in a form of hardware. It should be noted that division into modules in embodiments is an example and is merely logical function division. During actual implementation, there may be another division manner.

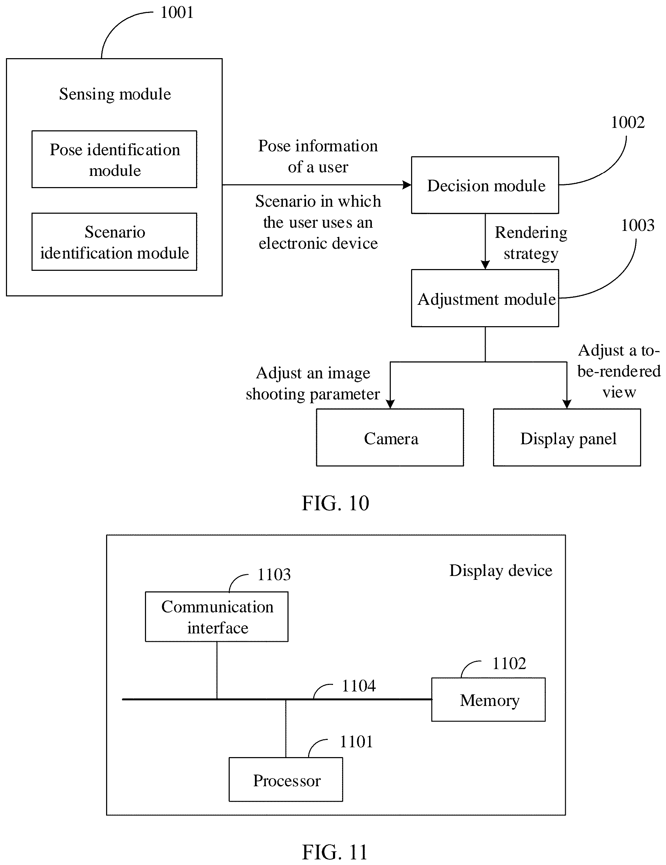

For example, with reference to FIG. 10, an electronic device provided in an embodiment of this application includes a sensing module 1001, a decision module 1002, and an adjustment module 1003.

The sensing module includes a pose identification module and a scenario identification module. The scenario identification module is configured to identify a scenario in which a user uses the electronic device, for example, a scenario in which the user uses an audio and video application in the electronic device, or a scenario in which the user uses a camera application in the electronic device. The pose identification module is configured to identify a pose of the user, to obtain pose information of the user. For example, the pose identification module may identify information about a gaze point, head rotation information, movement information, and the like of the user.

The decision module is configured to determine a rendering strategy of the electronic device based on the scenario in which the user uses the electronic device or the pose information of the user that is obtained by the sensing module. For example, the decision module may determine, based on the scenario in which the user uses the electronic device and that is obtained by the sensing module, an application used by the user, and determine a rendering strategy for an application view corresponding to the application. For another example, the decision module may determine, based on at least one of the information about the gaze point, the head rotation information, and the movement information of the user that are obtained by the sensing module, content to which the user pays attention in a displayed view. The decision module may determine a rendering strategy corresponding to the displayed view based on the content to which the user pays attention in the displayed view.

The adjustment module is configured to adjust a to-be-rendered view based on the rendering strategy determined by the decision module, and render an adjusted to-be-rendered view on a display panel (or a display).

For example, before the electronic device starts a target application and displays a third view corresponding to the target application, the adjustment module may adjust the third view based on a rendering strategy that is determined by the decision module and that is for the target application, to obtain a first view. Then, the adjustment module may render the first view on the display panel (or the display) of the electronic device.

For another example, after the electronic device displays the first view, if the decision module determines, based on the pose information of the user, that the rendering strategy of the electronic device is switched, the adjusting module adjusts the first view based on a rendering strategy that is determined by the decision module and that is obtained through the switching, to obtain a second view. Then, the adjustment module may render the second view on the display panel (or the display) of the electronic device.

In some embodiments, the decision module may further adjust a shooting parameter of a camera based on a rendering strategy. The camera is a camera configured to obtain a real-scene image corresponding to an environmental image included in the to-be-rendered image. The electronic device may include the camera, or the electronic device may be connected to an external camera. The decision module may increase the shooting parameter of the camera, to improve quality of a real-scene image obtained by the electronic device. The decision module may alternatively reduce the shooting parameter of the camera, to save computing resources when the camera obtains an environmental image.

In some embodiments, the decision module may further perform, based on a rendering strategy, optimization processing on an environmental image obtained by the camera, for example, noise reduction processing, ghost removal processing, dynamic range enhancement processing, or hole filling processing. The decision module may optimize the environmental image obtained by the camera, to improve quality of a real-scene image corresponding to the environmental image.

An embodiment of this application further provides an electronic device. As shown in FIG. 11, the electronic device may be a display device, and the display device includes one or more processors 1101, a memory 1102, and a communication interface 1103.

The memory 1102 and the communication interface 1103 are coupled to the processor 1101. For example, the memory 1102 and the communication interface 1103 may be coupled to the processor 1101 through a bus 1104.

The communication interface 1103 is configured to perform data transmission with another device. The memory 1102 stores computer program code. The computer program code includes computer instructions. When the computer instructions are executed by the processor 1101, the electronic device is enabled to perform the method in embodiments of this application.

The processor 1101 may be a processor or a controller, for example, a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processor may implement or execute various example logical blocks, modules, and circuits described with reference to content of the present disclosure. The processor may alternatively be a combination of processors implementing a computing function, for example, a combination of one or more microprocessors, or a combination of the DSP and a microprocessor. The processor may be configured to support the electronic device in performing the method steps provided in the foregoing embodiments.

The bus 1104 may be a peripheral component interconnect (Peripheral Component Interconnect, PCI) bus, an extended industry standard architecture (Extended Industry Standard Architecture, EISA) bus, or the like. The bus 1104 may be classified into an address bus, a data bus, a control bus, and the like. For ease of representation, only one thick line is used to represent the bus in FIG. 11, but this does not mean that there is only one bus or only one type of bus.

An embodiment of this application further provides a chip system, including a processor. The processor is coupled to a memory. The memory is configured to store a program or instructions. When the program or the instructions are executed by the processor, the chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using an integrated logic circuit of hardware in a processor or instructions in a form of software. The steps of the method disclosed with reference to embodiments of this application may be directly performed and completed by a hardware processor, or may be performed and completed by hardware in a processor in combination with a software module.

An embodiment of this application further provides a computer-readable storage medium. The computer storage medium stores computer program code. When the foregoing processor executes the computer program code, an electronic device performs related method steps in the foregoing method embodiments.

An embodiment of this application further provides a computer program product. When the computer program product is run on a computer, the computer is enabled to perform related method steps in the foregoing method embodiments.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is enabled to perform the scenario configuration method in the foregoing method embodiments.

The apparatus, the computer-readable storage medium, the computer program product, or the chip provided in embodiments of this application is configured to perform the corresponding method provided above. Therefore, for beneficial effects that can be achieved, refer to the beneficial effects in the corresponding method provided above. Details are not described herein again.

Methods or algorithm steps described with reference to the content disclosed in embodiments of this application may be implemented by hardware, or may be implemented by a processor by executing software instructions. The software instructions may include corresponding software modules. The software modules may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk drive, a removable hard disk drive, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

Based on the descriptions of the foregoing implementations, a person skilled in the art may clearly understand that, for a purpose of convenient and brief description, division into the foregoing functional modules is merely used as an example for illustration. During actual application, the foregoing functions may be allocated to different functional modules and completed according to a requirement. In other words, an inner structure of an apparatus is divided into different functional modules to complete all or some of the functions described above. For a detailed working process of the foregoing system, apparatus, and unit, refer to a corresponding process in the foregoing method embodiments. Details are not described herein again.

In the several embodiments provided in this application, it should be understood that the disclosed apparatus and method may be implemented in other manners. For example, the described apparatus embodiments are merely examples. For example, the division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

## Claims

1. A display method, applied to an electronic device, wherein the method comprises:
displaying a first view, wherein the first view comprises a real-scene image and a virtual-scene image, the real-scene image comprises an image of an environment around the electronic device, and the virtual-scene image comprises an image corresponding to virtual content; and
displaying a second view based on pose information of a user, wherein the second view is obtained based on an adjustment to the first view; and image quality of the virtual-scene image in the first view is better than image quality of a virtual-scene image in the second view, or image quality of the real-scene image in the first view is better than image quality of a real-scene image in the second view.

2. The method according to claim 1, wherein
the image quality of the virtual-scene image is related to at least one item of the following information: an area of the virtual-scene image, a distance between the virtual-scene image and an edge of a view in which the virtual-scene image is located, or a rendering parameter of the virtual-scene image;
the image quality of the real-scene image is related to at least one item of the following information: an area of the real-scene image, a distance between the real-scene image and an edge of a view in which the real-scene image is located, a rendering parameter of the real-scene image, or a shooting parameter of a camera configured to obtain the real-scene image; and
the rendering parameter comprises at least one of a definition parameter, a resolution parameter, a color saturation parameter, a brightness parameter, a color temperature parameter, or a contrast parameter; and the shooting parameter comprises at least one of a shooting frame rate or a shutter speed.

3. The method according to claim 2, wherein that the second view is obtained based on the adjustment to the first view comprises:
adjusting the at least one item of information corresponding to the virtual-scene image in the first view, to obtain the second view; and/or
adjusting the at least one item of information corresponding to the real-scene image in the first view, to obtain the second view.

4. The method according to any one of claims 1 to 3, wherein when the image quality of the virtual-scene image in the first view is better than the image quality of the virtual-scene image in the second view, an area of the virtual-scene image in the first view is greater than an area of the virtual-scene image in the second view; or
when the image quality of the real-scene image in the first view is better than the image quality of the real-scene image in the second view, an area of the virtual-scene image in the first view is less than an area of the virtual-scene image in the second view.

5. The method according to any one of claims 1 to 4, wherein when the image quality of the virtual-scene image in the first view is better than the image quality of the virtual-scene image in the second view, a distance between the virtual-scene image in the second view and an edge of the second view is less than a distance between the virtual-scene image in the first view and an edge of the first view.

6. The method according to any one of claims 1 to 5, wherein when the image quality of the real-scene image in the first view is better than the image quality of the real-scene image in the second view, the distance between the virtual-scene image in the first view and the edge of the first view is less than the distance between the virtual-scene image in the second view and the edge of the second view.

7. The method according to any one of claims 1 to 6, wherein when the image quality of the virtual-scene image in the first view is better than the image quality of the virtual-scene image in the second view, the image quality of the real-scene image in the second view is better than the image quality of the real-scene image in the first view; or
when the image quality of the real-scene image in the first view is better than the image quality of the real-scene image in the second view, the image quality of the virtual-scene image in the second view is better than the image quality of the virtual-scene image in the first view.

8. The method according to any one of claims 1 to 7, wherein the pose information comprises information about a gaze point of the user in the first view, and the information about the gaze point represents a position of the gaze point of the user in the first view, wherein
when the gaze point is located at a position of the real-scene image in the first view, the image quality of the virtual-scene image in the first view is better than the image quality of the virtual-scene image in the second view; or
when the gaze point is located at a position of the virtual-scene image in the first view, the image quality of the real-scene image in the first view is better than the image quality of the real-scene image in the second view.

9. The method according to any one of claims 1 to 8, wherein the pose information comprises head rotation information of the user, and the head rotation information of the user comprises a rotation angle of a head of the user in a horizontal direction and a rotation angle of the head of the user in a vertical direction, wherein
when the rotation angle of the head of the user in the horizontal direction is greater than a first threshold, and/or the rotation angle of the head of the user in the vertical direction is greater than a second threshold, the image quality of the virtual-scene image in the first view is better than the image quality of the virtual-scene image in the second view; or
when the rotation angle of the head of the user in the horizontal direction is less than or equal to a first threshold, and the rotation angle of the head of the user in the vertical direction is less than or equal to a second threshold, the image quality of the real-scene image in the first view is better than the image quality of the real-scene image in the second view.

10. The method according to any one of claims 1 to 9, wherein the pose information comprises movement information of the user, and the movement information of the user represents a head movement trajectory of the user, wherein
when a movement distance of the head of the user is greater than a preset distance, the image quality of the virtual-scene image in the first view is better than the image quality of the virtual-scene image in the second view; or
when a movement distance of the head of the user is less than or equal to a preset distance, the image quality of the real-scene image in the first view is better than the image quality of the real-scene image in the second view, wherein
the movement distance of the head of the user is obtained based on the movement information of the user.

11. The method according to any one of claims 1 to 10, wherein a target application in the electronic device corresponds to at least one application view, the at least one application view comprises a third view, and before the displaying the first view, the method further comprises:
displaying a setting interface, wherein the setting interface is configured to set a rendering strategy for the at least one application view, and the rendering strategy is used to adjust a to-be-rendered view;
receiving a first trigger operation input by the user in the setting interface, wherein the first trigger operation indicates to set the rendering strategy for the at least one application view to a target rendering strategy; and
setting the rendering strategy for the at least one application view to the target rendering strategy in response to the first trigger operation.

12. The method according to claim 11, wherein after setting the rendering strategy for the at least one application view to the target rendering strategy, the method further comprises:
receiving a second trigger operation input by the user, wherein the second trigger operation indicates to display the third view;
adjusting the third view based on the target rendering strategy in response to the second trigger operation; and
displaying the first view obtained based on the adjustment to the third view.

13. The method according to claim 11 or 12, wherein the rendering strategy comprises a first rendering strategy and a second rendering strategy;
that the second view is obtained based on the adjustment to the first view comprises: the second view is obtained based on the adjustment to the first view that is made by using the rendering strategy;
the first rendering strategy comprises reducing a rendering parameter of a virtual-scene image comprised in the to-be-rendered view;
the second rendering strategy comprises reducing a rendering parameter of a real-scene image comprised in the to-be-rendered view; and
the rendering parameter comprises at least one of a definition parameter, a resolution parameter, a color saturation parameter, a brightness parameter, a color temperature parameter, or a contrast parameter.

14. The method according to claim 13, wherein the first rendering strategy further comprises:
increasing the rendering parameter of the real-scene image comprised in the to-be-rendered view;
shrinking the virtual-scene image comprised in the to-be-rendered view;
moving the virtual-scene image comprised in the to-be-rendered view toward an edge of the to-be-rendered view; and/or
increasing at least one of the image shooting frame rate or the shutter speed of the camera, wherein the real-scene image comprised in the to-be-rendered view is obtained based on the camera.

15. The method according to claim 13 or 14, wherein the second rendering strategy comprises:
increasing the rendering parameter of the virtual-scene image comprised in the to-be-rendered view;
enlarging the virtual-scene image comprised in the to-be-rendered view;
moving the virtual-scene image comprised in the to-be-rendered view toward a center of the to-be-rendered view; and/or
reducing at least one of the image shooting frame rate or the shutter speed of the camera, wherein the real-scene image comprised in the to-be-rendered view is obtained based on the camera.

16. An electronic device, comprising a memory and one or more processors, wherein the memory is coupled to the processor, the memory stores computer program code, the computer program code comprises computer instructions, and when the computer instructions are executed by the processor, the electronic device performs the method according to any one of claims 1 to 15.

17. A computer-readable storage medium, comprising computer instructions, wherein when the computer instructions are run on an electronic device, the electronic device is enabled to perform the method according to any one of claims 1 to 15.

18. A computer program product, wherein when the computer program product is run on a computer, the computer is enabled to perform the method according to any one of claims 1 to 15.
